**Europäisches Patentamt**

**European Patent Office**

**Office européen des brevets**

(19)

(11) Veröffentlichungsnummer : **0 106 027**

**B1**

(12) **EUROPÄISCHE PATENTSCHRIFT**

(45) Veröffentlichungstag der Patentschrift :
**30.12.86**

(21) Anmeldenummer : **83106645.1**

(22) Anmeldetag : **07.07.83**

(51) Int. Cl.⁴ : **C 08 L 69/00**, C 08 L 67/02,
C 08 L 23/08, C 08 L 33/02,
C 08 L 33/08, C 08 L 33/20,
C 08 L 35/00, C 08 L 31/04,
C 08 L 33/26, C 08 L 51/04

(54) **Schlagzähe thermoplastische Formmassen mit hoher Wärmeformbeständigkeit.**

(30) Priorität : **15.09.82 DE 3234174**

(43) Veröffentlichungstag der Anmeldung :
**25.04.84 Patentblatt 84/17**

(45) Bekanntmachung des Hinweises auf die Patenterteilung : **30.12.86 Patentblatt 86/52**

(84) Benannte Vertragsstaaten :
**BE DE FR GB IT NL**

(56) Entgegenhaltungen :
**EP-A- 0 064 689**
**EP-A- 0 080 097**
**EP-A- 0 100 456**
**EP-A- 0 100 457**
**WO-A-80 /001 53**
**WO-A-80 /024 30**
**US-A- 4 172 859**
**Patent Abstracts of Japan Band 6, Nr. 177, 11. September 1982**
**Patent Abstracts of Japan Band 6, Nr. 78, 15. Mai 1982**

(73) Patentinhaber : **BASF Aktiengesellschaft**
**Carl-Bosch-Strasse 38**
**D-6700 Ludwigshafen (DE)**

(72) Erfinder : **Portugall, Michael, Dr.**
**Raiffeisenstrasse 1d**
**D-6706 Wachenheim (DE)**
Erfinder : **Blinne, Gerd, Dr.**
**Im Woogtal 7**
**D-6719 Bobenheim (DE)**
Erfinder : **Ziegler, Walter, Dr.**
**Starenweg 15**
**D-6803 Edingen-Neckarhausen (DE)**
Erfinder : **Walter, Manfred, Dr.**
**Hans-Purrmann-Allee 18**
**D-6720 Speyer (DE)**
Erfinder : **Reimann, Horst, Dr.**
**Adelheidstrasse 26**
**D-6520 Worms 1 (DE)**
Erfinder : **Schlichting, Karl, Dr.**
**Virchowstrasse 12**
**D-6712 Bobenheim-Roxheim (DE)**

EP 0 106 027 B1

## Beschreibung

Gegenstand der Erfindung sind Polymergemische aus wenigstens drei verschiedenen Polymeren auf der Basis von Polyester-/Polycarbonat-Mischungen, die neben einer hervorragenden Kälteschlagzähigkeit eine sehr gute Wärmeformbeständigkeit aufweisen.

Polymermischungen aus thermoplastischen Polyestern und Polycarbonat sind bekannt. Sie weisen gegenüber den reinen Polyestern ein verbessertes mechanisches Niveau insbesondere in Bezug auf die Schlagzähigkeit auf (DE-OS 2 417 002).

Es sind bereits verschiedene Verfahren bekannt, die Schlagzähigkeit von Polyester-/Polycarbonat-Mischungen besonders in der Kälte weiter zu erhöhen.

So werden 2-35 % bezogen auf die Gesamtmischung eines Pfropfcopolymeren aus Polybutadien zugesetzt, auf das eine Hülle aus Vinylmonomeren aufgepropft ist (DE-PS 2 343 609).

In der E-PA 20 737 werden Mischungen beschrieben, in denen Polyester-/Polycarbonat-Gemische mit Styrol-Dien-Blockcopolymeren modifiziert sind.

Ebenso sind in der E-PA 20 605 Mischungen beschrieben, die einen Polyacrylatpfropfkautschuk enthalten.

In der DE-OS 26 22 876 sind Mischungen beschreiben, die aus Polycarbonat und einem Ethylencopolymeren oder aus Polyester und einem Ethylencopolymeren bestehen. Der Zusatz des Copolymeren führt zu einer erheblichen Verbesserung der Zähigkeit.

Aus Patent Abstracts of Japan, Band 6, Nr. 177 sind Formmassen aus einem thermoplastischen Polyester, einem aromatischen Polycarbonat und einem durch Pfropfen einer $\alpha,\beta$-ungesättigten Carbonsäure oder Carbonsäurederivats, insbesondere Maleinsäureanhydrid oder Maleinsäureimid auf ein Polyethylen oder Ethylen-$\alpha$-Olefin-Copolymer mit einem Pfropfverhältnis von 0,05-3,0 Gew.% erhaltenen Pfropfpolymeren bekannt.

Alle bekannten Mischungen zeigen jedoch eine unbefriedigende Wärmeformbeständigkeit und keine befriedigende Schlagzähigkeit bei tiefen Temperaturen.

Die Patentanmeldung WO-A-8 002 430 beschreibt Formmassen, bei denen die Polymerkomponente aus Polybutylenterephthalat, einem aromatischen Polycarbonat (2 Gew.%) und einem Ethylen-Vinylacetat-Copolymeren besteht. Derartige Produkte weisen eine unbefriedigende Schlagzähigkeit auf.

Aus Patent Abstracts of Japan, Band 6, Nr. 78, ist die Herstellung von Schaumstoffen ausgehend von einem Gemisch aus Polyethylenterephthalat, Polycarbonat und einem mit Natrium oder Kalium neutralisierten Copolymeren aus Ethylen und einer $\alpha,\beta$-ungesättigten Carbonsäure beschrieben. Derartige Gemische sind für die Herstellung von ungeschäumten Formteilen ungeeignet, da das Polycarbonat durch den Alkaligehalt zersetzt wird unter Gasabspaltung.

Aus der US-Patentschrift 4 172 859 (= DE-A-2 622 876) sind Formmassen bekannt, die aus einem Polycarbonat und einem Ethylencopolymeren oder aus einem Polyester und einem Ethylencopolymeren bestehen. Während die Formmassen auf Polycarbonat-Basis zu Spannungsrißkorrosion neigen und eine unbefriedigende Chemikalienbeständigkeit aufweisen, zeigen die Formmassen auf Polyester-Basis eine unbefriedigende Wärmeformbeständigkeit und unbefriedigende Schlagzähigkeit. Überraschenderweise weisen die erfindungsgemäßen Formmassen keine dieser Nachteile auf.

Aus der Patentanmeldung WO-A-8 000 153 sind Formmassen bekannt, die ein Polycarbonat, einen mit Alkoholendgruppen versehenen Polyester aus Neopentylglykol und Adipinsäure sowie ein Olefincopolymeres enthalten. Der Polyester dient hier als polymerer Weichmacher. Die Produkte zeigen nur eine geringe Steifigkeit sowie unbefriedigende Wärmeformbeständigkeit und Chemikalienbeständigkeit.

Es wurde nun gefunden, daß durch den Zusatz von bestimmten Ethylencopolymeren zu Mischungen aus Polyester mit Polycarbonaten Formmassen erhalten werden, die sowohl eine wesentlich höhere Wärmeformbeständigkeit als auch eine hervorragende Schlagzähigkeit selbst bei tiefen Temperaturen aufweisen.

Gegenstand der Erfindung sind daher schlagzähe thermoplastische Formmassen mit hoher Wärmeformbeständigkeit, bestehend im wesentlichen aus

(A) mindestens 20 Gew.-Teilen mindestens eines aliphatischen Polyesters einer aromatischen Dicarbonsäure mit der relativen Viskosität von 1,2 bis 1,8,

(B) mindestens 20 Gew.-Teilen mindestens eines aromatischen Polycarbonats mit der relativen Viskosität von 1,2 bis 1,5, ausgenommen o,o,o',o'-Tetramethylbisphenol-A-polycarbonat,

(C) 1 bis 40 Gew.-Teilen mindestens eines — durch Polymerisation der Komponenten bei erhöhter Temperatur unter hohem Ethylendruck hergestellten — Ethylencopolymeren aus

(a) 40 bis 99 Gew.% Ethylen und

(b) 1 bis 60 Gew.% mindestens eines Carboxylgruppen und/oder Carboxylgruppenderivate enthaltenden Comonomeren, ausgenommen Vinylacetat und

(D) gegebenenfalls üblichen Zusatzstoffen in wirksamen Mengen,

wobei die Summe der Komponenten (A) bis (C) und (a) bis (b) jeweils 100 Gew.-Teile bzw. Gew.% beträgt.

Die Polyester gemäß der Erfindung (Komponente A) sind an sich bekannt. Sie besitzen Ketteneinheiten, die einen gegebenenfalls substituierten aromatischen Ring in der Hauptkette enthalten. Beispiele für derartige Substituenten des aromatischen Rings sind Halogene, wie z. B. Chlor, Brom, und $C_1$-$C_4$-

2

Alkylgruppen, wie z. B. Methyl-, Ethyl-, Propyl- und Butylgruppen. Die Polyester werden beispielsweise hergestellt durch Reaktion der entsprechenden aromatischen Dicarbonsäuren, deren Ester oder anderer esterbildender Derivate mit Dihydroxiverbindungen in an sich bekannter Weise. Verwendbare Dihydroxiverbindungen sind beispielsweise Glykole mit $C_2$-$C_6$, besonders Ethylenglykol, 1,4-Butandiol, 1,4-Butendiol und 1,6-Hexandiol; ebenso können 1,4-Hexandiol, 1,4-Cyclohexandiol, 1,4-Bis-(hydroximethyl)-cyclohexan, Bisphenol A, Neopentylglykol, esterbildende Derivate davon und ebenso Mischungen eingesetzt werden.

Die aromatischen Dicarbonsäuren sind beispielsweise Naphthalindicarbonsäure, Terephthalsäure, Isophthalsäure, esterbildende Derivate und Mischungen davon.

In den Polyestern können die aromatischen Dicarbonsäuren teilweise durch andere Dicarbonsäuren ersetzt sein. Als Modifizierungsmittel kommen gegebenenfalls aliphatische und cycloaliphatische Dicarbonsäuren in Frage, wie z. B. Adipinsäure, Azelainsäure, Sebazinsäure, Dodecandisäure und Cyclohexandicarbonsäure.

Bevorzugte Polyester sind Polyalkylenterephthalate mit einer $C_2$-$C_6$-Diol-Komponente, wie Polyethylenterephthalat und insbesondere Polybutylenterephthalat.

Die Polyester (Komponente A) sind charakterisiert durch eine relative Viskosität von 1.2 bis 1.8, gemessen in einer 0,5 %igen Lösung in einem Phenol-/o-Dichlorbenzolgemisch von 3 : 2 Gewichtsteilen bei 25 °C.

Die aromatischen Polycarbonate (Komponente B) gemäß der Erfindung sind an sich bekannt. Sie können z. B. gemäß dem Verfahren der deutschen Patentschrift 1 300 266 durch Grenzflächenpolykondensation oder gemäß dem Verfahren der deutschen Offenlegungsschrift 1 495 730 durch Umesterung von Diphenylcarbonat mit Bisphenol A hergestellt werden. Ganz oder teilweise (bis etwa 30 Molprozent) an die Stelle von Bisphenol A können andere aromatische Bis-hydroxyverbindungen treten, insbesondere Bis-(4-hydroxyphenyl)-pentan-2,2, 2,6-Dihydroxynaphthalin, Bis-(4-hydroxyphenyl)-sulfon, Bis-(4-hydroxyphenyl)-ether, Bis-(4-hydroxyphenyl)-sulfid, Bis-(4-hydroxyphenyl)-methan, Bis-(4-hydroxyphenyl)-ethan-1,1, 4,4'-Dihydroxydiphenyl.

Für den erfindungsgemäßen Zweck geeignete Polycarbonate sind insbesondere solche, die eine relative Viskosität (gemessen bei 25 °C an einer 0,5 %igen Methylenchloridlösung) von 1,2 bis 1,5, vorzugsweise von 1,28 bis 1,40 haben.

Die erfindungsgemäßen Ethylen-Copolymerisate (Komponente C) bestehen aus

(a) 40 bis 99 Gew.%, vorzugsweise 60 bis 95 Gew.%, Ethylen und

(b) 1 bis 60 Gew.%, vorzugsweise 5 bis 40 Gew.%, mindestens eines Carboxylgruppen oder Carboxylgruppenderivate enthaltenden Comonomeren.

Als Comonomere (b) werden beispielsweise verwendet Acrylsäure, Methacrylsäure, Fumarsäure, Maleinsäure(anhydrid) oder Derivate dieser Säuren, z. B. ein $C_1$ bis $C_8$-Alkylester, ein Amid, ein $C_1$- bis $C_8$-Alkyl- oder Dialkylamid, ein Salz dieser Säuren, insbesondere ein Metallsalz, oder Acrylnitril.

Die bevorzugten Copolymeren besitzen eine Glasübergangstemperatur unterhalb von 0 °C, insbesondere unter — 20 °C. Sie sind im allgemeinen hochmolekular und weisen einen Schmelzindex MFI 190/2,16 (DIN 53735) zwischen 1 und 80 auf.

Bezogen auf die Summe von (A), (B) und (C) werden die Copolymeren (C) in einer Menge von 1 bis 40 Gew.%, vorzugsweise 5 bis 30 Gew.%, insbesondere 5 bis 20 Gew.% zugesetzt.

Die Herstellung der Copolymeren erfolgt in üblicher, an sich bekannter Weise durch Polymerisation der Komponenten bei erhöhter Temperatur unter hohem Ethylendruck.

Die erfindungsgemäßen Formmassen können gegebenenfalls zusätzlich zu (A), (B), (C) und gegebenenfalls (D) noch mindestens einen Pfropfkautschuk mit einer Glastemperatur kleiner als — 20 °C enthalten. Die Pfropfkautschukkomponente kann in einer Menge von 2 bis 15 Gew.-Teilen, bezogen auf 100 Gewichtsteilen der Komponenten (A) bis (C), bevorzugt von 2 bis 10 Gew.-Teilen zugesetzt werden.

Geeignete Pfropfcopolymere im Sinne der Erfindung sind Produkte, die durch Polymerisation von einem oder mehreren Monomeren in Gegenwart von Präpolymeren erhältlich sind, wobei ein Teil der Monomeren auf die Präpolymerenmoleküle aufgepfropft ist. Dieses Aufpfropfen kann in mehreren Stufen ablaufen, wobei sich die Monomerenzusammensetzung von Stufe zu Stufe ändern kann.

Die Herstellung derartiger Pfropfcopolymerer ist im Prinzip bekannt (vgl. R.J. Ceresa, Block and Graft Copolymers, Butterworth, London, 1962).

Für die Zwecke der Erfindung sind prinzipiell alle Pfropfcopolymeren geeignet, sofern sie kautschukelastische Eigenschaften besitzen und sofern sie eine Glastemperatur unterhalb von —20 °C, insbesondere zwischen — 150 und — 20 °C aufweisen.

Beispiele für solche Pfropfcopolymeren sind Systeme auf Basis von Polybutadien, wie sie exemplarisch beschrieben werden in der DE-PS 1 252 902.

Besonders geeignete Pfropfcopolymere sind solche auf der Basis von Polyacrylaten. Insbesondere eignen sich Acrylatpfropfcopolymere wie sie in der DE-PS 2 444 584 beschrieben werden.

Der Zusatz von Pfropfcopolymeren führt zu Vorteilen in der Oberflächenbeschaffenheit von Spritzgußteilen, die aus der erfindungsgemäßen Formasse hergestellt werden.

Die Formmassen gemäß der Erfindung können durch übliche Zusatzstoffe, wie Stabilisatoren und Oxidationsverzögerer, Mittel gegen Wärmezersetzung und Zersetzung durch ultraviolettes Licht, Gleit- und Entformungsmittel, Färbemittel, wie Farbstoffe und Pigmente, faser- und pulverförmige Füll- und Verstärkungsmittel, Keimbildungsmittel, Weichmacher usw. modifiziert werden, die in üblichen wirksamen Mengen eingesetzt werden.

Die Stabilisatoren können den Massen in jedem Stadium der Herstellung der thermoplastichen Massen zugesetzt werden. Vorzugsweise werden die Stabilisatoren zu einem frühen Zeitpunkt zugesetzt, um zu verhindern, daß die Zersetzung bereits beginnt, bevor die Masse geschützt werden kann. Solche Stabilisatoren müssen mit der Masse verträglich sein.

Zu den Oxidationsverzögerern und Wärmestabilisatoren, die den thermoplastischen Massen gemäß der Erfindung zugesetzt werden können, gehören diejenigen, die allgemein zu Polymeren zugesetzt werden, wie z. B. Halogenide von Metallen der Gruppe I des periodischen Systems, z. B. Natrium, Kalium, Lithium, mit Kupfer-(I)-halogeniden, z. B. Chlorid, Bromid, Jodid, sterisch gehinderte Phenole, Hydrochinone, verschiedene substituierte Vertreter dieser Gruppen und kombinationen derselben in Konzentrationen bis 1 Gew.%, bezogen auf das Gewicht der Mischung.

Als UV-Stabilisatoren kann man ebenfalls diejenigen, die allgemein zu Polymeren zugesetzt werden, in Mengen bis 2,0 Gew.%, bezogen auf die Mischung, verwenden. Beispiele für UV-Stabilisatoren sind verschiedene substituierte Resorcine, Salicylate, Benzotriazole, Benzophenone und dergleichen.

Geeignete Gleit- und Entformungsmittel, die z. B. in Mengen bis 1,0 Gew.% der thermischen Masse zugesetzt werden, sind Stearinsäure, Stearinalkohol, Stearinsäureester und -amide. Ferner können zugesetzt werden : organische Farbstoffe, wie Nigrosin usw., Pigmente, z. B. Titandioxid, Cadmiumsulfid, Cadmiumsulfid-selenid, Phthalocyanine, Ultramarinblau, Ruß usw. ; faser- und pulverförmige Füllstoffe und Verstärtkungsmittel, wie Kohlenstoffasern, Glasfasern, amorphe Kieselsäure, Asbest, Calciumsilicat, Aluminiumsilicat, Magnesiumcarbonat, Kaolin, Kreide, gepulverter Quarz, Glimmer, Feldspat usw. in Mengen bis 50 Gew.% der Masse, Keimbildungsmittel, wie Talkum, Calciumfluorid, Natriumphenylphosphinat, Aluminiumoxid und feinteiliges Polytetrafluorethylen usw., Weichmacher in Mengen bis etwa 20 Gew.% der Masse, z. B. Phthalsäuredioctylester, Phthalsäuredibenzylester, Phthalsäurebutylbenzylester, Kohlenwasserstofföle, N-n-Butylbenzolsulfonamid, o- und p-Toluolethylsulfonamid usw. Die Färbemittel (Farbstoffe und Pigmente) können in Mengen bis etwa 5,0 Gew.%, bezogen auf die Masse, zugesetzt werden.

Die verfestigten Massen gemäß der Erfindung werden üblicherweise in einem geschlossenen System durch Schmelzmischen des Polyesters und des Polycarbonats mit den übrigen Komponenten zu einem gleichmäßigen Gemisch in einem Mehrfachschneckenextruder, wie einem Werner & Pfleiderer-Zweiwellenextruder oder anderen herkömmlichen Plastifizierungsvorrichtungen, wie einer Brabender-Mühle, einer Banbury-Mühle oder dgl. hergestellt. Die Gemische können aber auch durch gemeinsames Ausfällen aus Lösung oder durch Mischen oder Trockenmischen der Komponenten und anschließendes Schmelzstrangpressen des trockenen Gemisches hergestellt werden.

Die erfindungsgemäßen Formmassen sind für die Spritzgieß- und Extrusionsverarbeitung geeignet, zur Herstellung von hochbeanspruchbaren, thermostabilen, schlagzähen Formteilen für technische Zwecke aller Art.

Beispiele 1-13

50 (bzw. 40) Gew.-Teile eines Polybutylenterephthalates mit der relativen Viskosität 1.60, gemessen in einer 0,5 %igen Lösung in einem Phenol-/o-Dichlorbenzolgemisch von 3 : 2 Gewichtsteilen bei 25 °C, und 50 (bzw. 45) Gew.-Teile eines Bis-phenol-A-Polycarbonats mit der relativen Viskosität 1.36, gemessen in einer 0,5 %igen Lösung in Methylenchlorid bei 25 °C, und der Schlagzähmodifier wurden intensiv gemischt, in einem Zweischneckenextruder vom Typ ZSK 28 bei 250 °C aufgeschmolzen und homogenisiert und in ein Wasserbad extrudiert. Nach Granulierung und Trocknung wurden die Mischungen auf einer Spritzgußmaschine zu Prüfkörpern verspritzt und diese ohne weitere Nachbehandlung geprüft.

Beispiel 1 enthält als Vergleich keinen Zusatz von Copolymeren.

In den Vergleichsbeispielen 2 und 3 wurde ein Polybutadienpfropfkautschuk gemäß DE-PS 2 343 609 eingesetzt.

Im Vergleichsbeispiel 4 wurde ein Acrylatpfropfkautschuk gemäß DE-PS 2 444 584, Typ A verwendet.

Die in den erfindungsgemäßen Beispielen 5 bis 13 eingesetzten Copolymeren sind durch den Schmelzindex, gemessen bei 190 °C und 2,16 kg Gewicht, folgendermaßen charakterisiert :

Tabelle 1

| Beispiel Nr. | Copolymer | MFI 190/2,16 [9/10 min] |
|---|---|---|
| 5, 12, 13 | E-nBA-AS (64-31-5) | 17 |
| 6 | E-nBA-AS (65-33-2) | 17 |
| 7 | E-nBA-AS (64-32-4) | 22 |
| 8 | E-AS (92-8) | 7 |
| 9 | E-nBA (68-32) | 25 |

(Fortsetzung)

| Beispiel Nr. | Copolymer | MFI 190/2,16 [9/10 min] |
|---|---|---|
| 10 | E–MSA–nBA (62–3–35) Säurezahl 30 | 35 |
| 11 | E–MSA–nBA (61–4–35) Säurezahl 37 | 65 |

E = Ethylen
nBA = n-Butylacrylat
MSA = Maleinsäureanhydrid
AS = Acrylsäure

Die Zusammensetzung der erfindungsgemäßen Copolymeren ist in der Tabelle 1 als Gewichtsprozent der entsprechenden Monomeren angegeben. Der Gehalt an Maleinsäureanhydrid in den Copolymeren der beispiele 10 und 11 ist zusätzlich charakterisiert durch die Säurezahl (SZ), angegeben in mg KOH, die zur Neutralisation von 1 g Copolymer erforderlich sind.

Tabelle 2

| Nr. | Zusammensetzung (Gew.-Teile) | | | Lochschlagzähigkeit bei -60°C [kJ/m$^2$] DIN 53 753 | Vicat-Temperatur [°C] DIN 53 460 |
|---|---|---|---|---|---|
| | PC | Polyester | Schlagzäh-Modifier | | |
| 1 * | 50 | 50, PBTP | – | 27 | 74 |
| 2 * | 45 | 40, PBTP | 15, Polybutadienpfropf-kautschuk | 84 | 74 |
| 3 * | 50 | 40, PBTP | 10, " | 63 | 79 |
| 4 * | 50 | 40, PBTP | 10, Acrylatpfropf-kautschuk | 78 | 79 |
| 5 | 45 | 40, PBTP | 15, E–nBA–AS | 77 | 110 |
| 6 | 50 | 40, PBTP | 10, E–nBA–AS | 81 | 118 |
| 7 | 50 | 40, PBTP | 10, E–nBA–AS | 88 | 116 |
| 8 | 50 | 40, PBTP | 10, E–AS | 41 | 122 |
| 9 | 50 | 40, PBTP | 10, E–nBA | 45 | 119 |
| 10 | 50 | 40, PBTP | 10, E–MSA–nBA | 77 | 119 |
| 11 | 50 | 40, PBTP | 10, E–MSA–nBA | 64 | 120 |
| 12 | 50 | 40, PBTP | 5, E–nBA–AS 5, Acrylatpfropfkautschuk | 88 | 123 |
| 13 | 50 | 40, PBTP | 8, E–nBA–AS 2, Acrylatpfropfkautschuk | 81 | 127 |

* nicht erfindungsgemäß

Die Tabelle 2 zeigt für das Vergleichsbeispiel 1 eine Lochschlagzähigkeit von 27 kJ/m² bei — 60 °C und eine Vicat-Temperatur von 74 °C. Durch Schlagzähmodifizierung dieses Systems in an sich bekannter Weise wird die Kälteschlagzähigkeit beträchtlich erhöht, die Vicat-Temperatur als Maß für die Wärmeformbeständigkeit jedoch nur unwesentlich beeinflußt (Beispiele 2-4).

In den erfindungsgemäßen Beispielen 5 bis 13 zeigt sich jedoch überraschenderweise, daß durch Zusatz der beschriebenen Copolymeren nicht nur eine gute Kälteschlagzähigkeit erreicht wird, sondern auch eine außerordentliche Erhöhung der Vicat-Temperatur beobachtet wird.

**Patentansprüche**

1. Schlagzähe thermoplastische Formmassen mit hoher Wärmeformbeständigkeit, bestehend im wesentlichen aus

(A) mindestens 20 Gew.-Teilen mindestens eines aliphatischen Polyesters einer aromatischen Dicarbonsäure mit der relativen Viskosität von 1,2 bis 1,8

(B) mindestens 20 Gew.-Teilen mindestens eines aromatischen Polycarbonats mit der relativen Viskosität von 1,2 bis 1,5, ausgenommen o,o,o',o'-Tetramethylbisphenol-A-polycarbonat

(C) 1 bis 40 Gew.-Teilen mindestens eines — durch Polymerisation der Komponenten bei erhöhter Temperatur unter hohem Ethylendruck hergestellten — Ethylencopolymeren aus

(a) 40 bis 99 Gew.-% Ethylen und

(b) 1 bis 60 Gew.-% mindestens eines Carboxylgruppen und/oder Carboxylgruppenderivate enthaltenden Comonomeren, ausgenommen Vinylacetat, und

(D) gegebenenfalls üblichen Zusatzstoffen in wirksamen Mengen, wobei die Summe der Komponenten (A) bis (C) und (a) bis (b) jeweils 100 Gew.-Teile bzw. Gew.-% beträgt.

2. Schlagzähe thermoplastische Formmassen gemäß Anspruch 1, dadurch gekennzeichnet, daß die Komponente (A) ein $C_2$ bis $C_4$-Polyalkylenterephthalat ist.

3. Schlagzähe thermoplastische Formmassen gemäß Ansprüchen 1 oder 2, dadurch gekennzeichnet, daß die Komponente (B) ein Polycarbonat auf Basis von Bisphenol-A ist.

4. Schlagzähe thermoplastische Formmassen gemäß einem der Ansprüche 1 bis 3, dadurch gekennzeichnet, daß die Komponente (C) einen Schmelzindex MFI 190/2.16 von 1 bis 80 (DIN 53 735) und eine Glasübergangstemperatur unterhalb von 0 °C besitzt.

5. Schlagzähe thermoplastische Formmassen gemäß einem der Ansprüche 1 bis 4, dadurch gekennzeichnet, daß das Comonomere (b) der Komponente (C) Acrylsäure, Methacrylsäure, Fumarsäure, Maleinsäure(anhydrid), ein $C_1$- bis $C_8$-Alkylester, ein Amid oder ein $C_1$ bis $C_8$-Alkyl- oder Dialkylamid oder ein Salz dieser Säuren oder Acrylnitril ist.

6. Schlagzähe thermoplastische Formmassen gemäß einem der Ansprüche 1 bis 5, gekennzeichnet durch eine Wärmeformbeständigkeit nach Vicat (DIN 53 460) oberhalb von 100°.

7. Schlagzähe thermoplastische Formmassen gemäß einem der Ansprüche 1 bis 6, dadurch gekennzeichnet, daß sie zusätzlich (E) 2 bis 15 Gew.-Teile mindestens eines Pfropfkautschuks mit einer Glastemperatur unterhalb von — 20 °C enthalten.

## Claims

1. Impact-resistant thermoplastic moulding materials with high heat distortion strength, consisting essentially of

(A) at least 20 parts by weight of at least one aliphatic polyester of an aromatic dicarboxylic acid having a relative viscosity of from 1.2 to 1.8,

(B) at least 20 parts by weight of at least one aromatic polycarbonate having a relative viscosity of from 1.2 to 1.5, excluding o,o,o',o'-tetramethylbisphenol-A-polycarbonate,

(C) 1 to 40 parts by weight of at least one ethylene copolymer prepared by polymerizing the components at elevated temperature under high ethylene pressure, and consisting of

(a) 40 to 99 % by weight of ethylene, and

(b) 1 to 60 % by weight of at least one comonomer containing carboxyl groups and/or carboxyl group derivatives, excluding vinyl acetate, and, if desired,

(D) conventional additives in effective amounts, the sums of the components (A) to (C) and (a) and (b) being 100 parts by weight and 100 % by weight respectively.

2. Impact-resistant thermoplastic moulding materials as claimed in claim 1, wherein component (A) is $C_2$-$C_4$-polyalkylene terephthalate.

3. Impact-resistant thermoplastic moulding materials as claimed in claim 1 or 2, wherein component (B) is a polycarbonate based on bisphenol A.

4. Impact-resistant thermoplastic moulding materials as claimed in any of claims 1 to 3, wherein component (C) has a melt index MFI (190 °C/2.16 kg) of from 1 to 80 (DIN 53 735) and a glass transition temperature of less than 0 °C.

5. Impact-resistant thermoplastic moulding materials as claimed in any of claims 1 to 4, wherein comonomer (b) of component (C) is acrylic acid methacrylic acid, fumaric acid, maleic acid (anhydride), a $C_1$-$C_8$-alkyl ester, an amide, a $C_1$-$C_8$-alkylamide, a $C_1$-$C_8$-dialkylamide, or a salt of these acids, or is acrylonitrile.

6. Impact-resistant thermoplastic moulding materials as claimed in any of claims 1 to 5, which has a Vicat softening point (DIN 53 460) of more than 100 °C.

7. Impact-resistant thermoplastic moulding materials as claimed in any of claims 1 to 6, which additionally contains (E) from 2 to 15 parts by weight of at least one graft rubber having a glass transition temperature below — 20 °C.

## Revendications

1. Matières à mouler thermoplastiques résilientes à haute stabilité dimensionnelle à chaud, composées essentiellement :

(A) d'au moins 20 parties en poids d'au moins un polyester aliphatique d'un acide dicarboxylique aromatique d'une viscosité relative de 1,2 à 1,8 ;

(B) d'au moins 20 parties en poids d'au moins un polycarbonate aromatique d'une viscosité relative de 1,2 à 1,5, à l'exception du polycarbonate de o,o,o',o'-tétraméthyl-bisphénol-A ;

(C) de 1 à 40 parties en poids d'au moins un copolymère éthylénique, préparé par polymérisation des composants à température accrue sous une pression d'éthylène élevée, les composants étant :

(a) 40 à 99 % en poids d'éthylène et

(b) 1 à 60 % en poids d'au moins un comonomère à groupes carboxyle et(ou) dérivés de groupes carboxyle, à l'exception de l'acétate de vinyle ;

(D) de proportions efficaces d'additifs usuels éventuels, les sommes des composants (A) à (C) et (a) + (b) étant chaque fois égales à 100 parties et % en poids.

2. Matières à mouler thermoplastiques résilientes suivant la revendication 1, caractérisées en ce que le composant (A) est un poly(téréphtalate d'alkylène en $C_2$ à $C_4$).

3. Matières à mouler thermoplastiques résilientes suivant la revendication 1 ou la revendication 2, caractérisées en ce que le composant (B) est un polycarbonate à base de bisphénol-A.

4. Matières à mouler thermoplastiques résilientes suivant l'une des revendications 1 à 3, caractérisées en ce que le composant (C) possède un indice de fusion (melt flow index) 190/2,16 (d'après la norme DIN 53 735) de 1 à 80 et une température de transition vitreuse inférieure à 0 °C.

5. Matières à mouler thermoplastiques résilientes suivant l'une des revendications 1 à 4, caractérisées en ce que le comonomère (b) du composant (C) est choisi parmi l'acide acrylique, l'acide méthacrylique, l'acide fumarique, l'acide et l'anhydride maléique, les esters alkyliques en $C_1$ à $C_8$, les amides, les amides d'alkyle ou de dialkyle en $C_1$ à $C_8$ et les sels de ces acides et le nitrile acrylique.

6. Matières à mouler thermoplastiques résilientes suivant l'une des revendications 1 à 5, caractérisées en ce qu'elles possèdent une stabilité dimensionnelle selon Vicat (d'après la norme DIN 53 460) supérieure à 100 °C.

7. Matières à mouler thermoplastiques résilientes suivant l'une des revendications 1 à 6, caractérisées en ce qu'elles contiennent en outre comme composant (E) entre 2 et 15 parties en poids d'au moins un caoutchouc de greffage avec une température de transition vitreuse inférieure à — 20 °C.